# EUROPEAN PATENT APPLICATION

(11) **EP 1 271 197 A2**
(43) Date of publication of application: **02.01.2003**
(21) Application number: 02009771.3
(22) Date of filing: 30.04.2002
(51) Int. Cl.: G02B 6/293

(54) **Wavelength division multiplexer using planar lightwave circuit**

(30) Priority: 23.06.2001 KR 2001036001
(71) Applicant: SAMSUNG ELECTRONICS CO., LTD., Suwon-City, Kyungki-do (KR)
(72) Inventor: Kim, Dong-Soo, Paldal-gu, Suwon-city, Kyungki-do (KR); Jung, Sun-Tae, Paldal-gu, Suwon-city, Kyungki-do (KR); Han, Dong-Kyoon, Paldal-gu, Suwon-city, Kyungki-do (KR)
(74) Representative: Grünecker, Kinkeldey, Stockmair & Schwanhäusser Anwaltssozietät

(57) **Abstract**

The present invention relates to a wavelength-division multiplexer employing a planar lightwave circuit in the wavelength-division multiplexer/demultiplexer of a telecommunication system. The multiplexer includes a planar lightwave circuit (200) having zigzagged waveguides (200a) through which optical signals are transmitted; an input optical fiber and output optical fibers successively connected with a plurality of ports of the zigzagged waveguides, respectively; and, a plurality of thin film filters (201), respectively, attached to the plurality of ports through an aligning procedure for passing wavelength components corresponding to preset central wavelengths thereof among a multitude of wavelength components inputted from the input optical fiber toward the output optical fibers.

## Description

### CLAIM OF PRIORITY

The present application makes reference to and claims all benefits accruing under 35 U.S.C. §119 from an application entitled, "WAVELENGTH DIVISION MULTIPLEXER USING PLANAR LIGHTWAVE CIRCUIT," filed earlier in the Korean Industrial Property Office on June 23, 2001 and thereby duly assigned Serial No. 36001/2001.

### BACKGROUND OF THE INVENTION

### 1. Field of the Invention

The present invention relates to a multiplexer/demultiplexer used in a wavelength-division-multiplexing (WDM) telecommunication system and, more particularly, to a wavelength-division multiplexer using a planar lightwave circuit (PLC).

### 2. Description of the Related Art

In a wavelength-division-multiplexing (WDM) telecommunication system, optical signals having N wavelengths are simultaneously transmitted through an optical fiber for data transmission. The WDM system requires a plurality of optical transmitters and receivers for simultaneously exchanging multi-channel optical signals transmitted therebetween. To this end, various types of micro-optical components, such as a thin film filter, arrayed-waveguidegrating instruments, optical-fiber-grating instruments, etc., are often employed. Recently, a wavelength-division-multiplexing technique incorporating a lower number of channels (fewer than 16 channels) has been widely used due to high performance and reliability induced by the thin film filter.

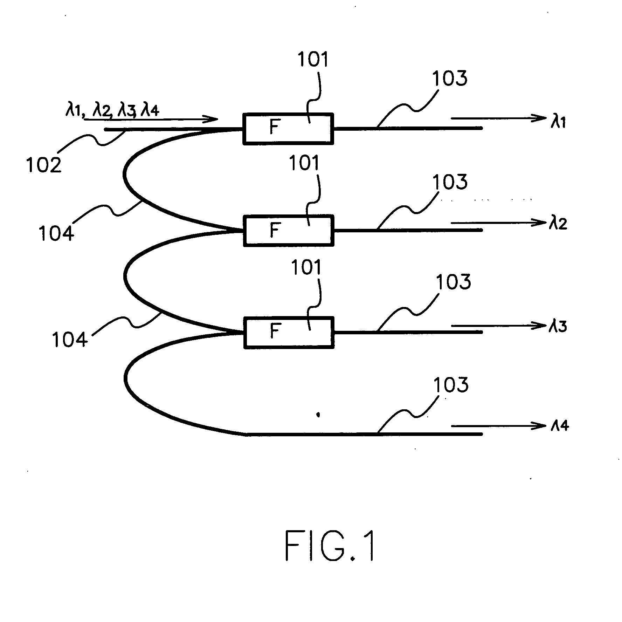

FIG. 1 shows the conventional construction of the WDM employing the thin film filter. As shown in FIG. 1, when various wavelength channels are inputted into an input optical fiber 102 of the conventional WDM, each filter 101 passes a specified wavelength according to its central wavelength, while reflecting other wavelengths. The reflected wavelengths are inputted to the next thin film filter 101 through a connecting optical fiber 104. In this manner, wavelength division is implemented to the last channel, which does not require any filtering operation. Meanwhile, the respective wavelength passed through the filter 101 is outputted through the output side of the optical fiber 103.

The conventional wavelength-division multiplexer as described above has some drawbacks. As each thin film filter is separately packaged to connect between the input optical fiber, the output optical fiber, and the connecting optical fiber, the manufacturing procedure becomes complex, time consuming, and relatively costly. In particular, the processing time and the fabrication cost are increased in proportion to the increase in the number of channels. As a result, the conventional thin film filter type WDM is uneconomical when designed to accommodate a high number of channels.

### SUMMARY OF THE INVENTION

The present invention overcomes the above-described problems and provides additional advantages, by providing a wavelength-division multiplexer which simplifies the packaging procedure. To achieve this goal, the present invention utilizes a planar lightwave circuit and a number of thin film filters to simplify the packaging procedure.

Accordingly, a wavelength-division multiplexer/demultiplexer according to the present invention includes: a planar lightwave circuit having zigzagged waveguides through which optical signals are transmitted; an input optical fiber and output optical fibers successively connected with a plurality of ports of the zigzagged waveguides, respectively; and, a number of thin film filters respectively attached to the plurality of ports through an aligning procedure for passing wavelengths corresponding to the preset central wavelengths thereof.

### BRIEF DESCRIPTION OF THE DRAWINGS

FIG. 1 is a view illustrating the construction of a conventional wavelength-division multiplexer; and,
FIG. 2 is a view illustrating the construction of a wavelength-division multiplexer using a planar lightwave circuit in accordance with an embodiment of the present invention.

### DETAILED DESCRIPTION OF THE PREFERRED EMBODIMENTS

In the following description, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments, which depart from these specific details. For purposes of simplicity and clarity, detailed descriptions of well-known devices, circuits, and methods are omitted so as not to obscure the description of the present invention with unnecessary detail.

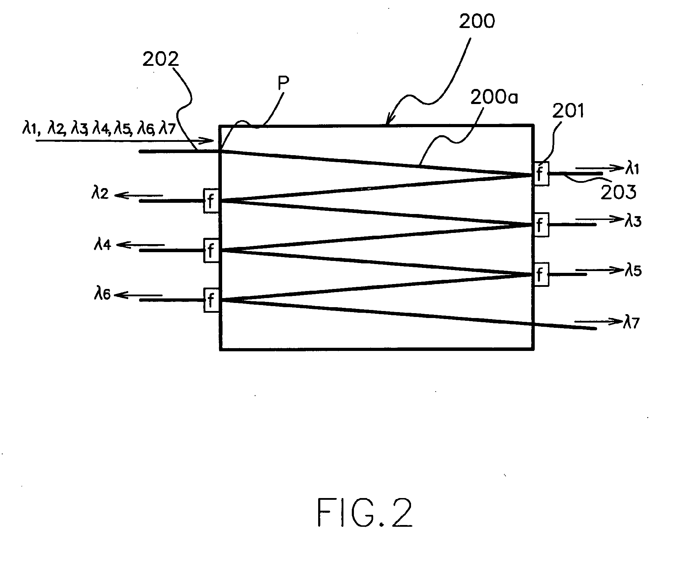

FIG. 2 is a view illustrating the construction of a wavelength-division multiplexer using a planar lightwave circuit in accordance with the embodiment of the present invention. As shown in FIG. 2, the wavelength-division multiplexer according to the present invention comprises a planar lightwave circuit 200, an input optical fiber 202, a plurality of thin film filters 201, and a plurality of output optical fibers 203. The input optical fiber 202 is connected to the input port P of the planar lightwave circuit 200. The planar lightwave circuit 200 includes a plurality of waveguides in zigzagged pattern 202a, and the thin film filters 201 are connected with the respective port of the zigzagged waveguides 202a for passing the distinct wavelengths according to the central wavelength assigned to each thin film filter. The output optical fibers 203 are coupled to the respective thin film filters 201 to output only the wavelengths, which are passed through the respective thin film filters 201.

The planar lightwave circuit 200, which serves as a chip-shaped optical element, is manufactured through a number of processes, including an etching process conducted on a silicon wafer. As such, the planar lightwave circuit 200 includes a waveguide structure, which is composed of an optical core (not shown) having the shape of a channel through which an optical signal is transmitted, and a cladding layer (not shown) surrounding the optical core. In addition, the planar lightwave circuit 200 has a channel waveguide structure in which incident light is restricted not only horizontally but also in a vertical direction so as to guide the incident light along the zigzagged waveguides 202a.

In order to allow passage of only a desired wavelength among the wavelengths transmitted in the above-mentioned way, the thin film filter 201, which is preferably a dielectric thin film filter, may use a band pass filter to pass the desired wavelength. Alternatively, the thin film filter 201 may use either a high-pass filter or a low-pass filter, in such a way that each filter passes only the long wavelength components or short wavelength components around its own cutoff wavelength. The thin film filter 201 according to the present invention is configured to connect the input optical fiber, the output optical fibers, and the planar lightwave circuit 200, as shown in FIG. 2. The thin film filters 201 are attached to the planar lightwave circuit 200, then integrally packaged therewith. The input optical fiber 202 and the plurality of output optical fibers 203 are attached, in the form of blocks, to the planar lightwave circuit 200 - the thin film filters 201 - then integrally packaged therewith through a single aligning process.

In operation, a plurality of optical signals λ ₁, *λ* ₂, λ ₃, λ ₄, λ ₅, λ ₆, and λ ₇ are inputted to the first waveguide of the zigzaged waveguides 202a through the input-side optical fiber 202. Only the wavelength component λ ₁ corresponding to a central wavelength of the first thin film filter 201 is outputted through the corresponding output-side optical fiber 203. The other wavelength components λ ₂, λ ₃, λ ₄, λ ₅, λ ₆, and λ ₇ are reflected from the first thin film filter 201. These reflected wavelength components are inputted to a second waveguide 202a, then a wavelength component λ ₂ corresponding to the central wavelength of a second thin film filter 201 is outputted through the corresponding output-side optical fiber 203. The other wavelength components λ ₃, λ ₄, λ ₅, λ ₆, and λ ₇ are reflected from the second thin film filter 201 and directed toward a third waveguide 202a. In this manner, the reflected wavelength components are repeatedly filtered and reflected as described above until the final wavelength component λ ₇ is outputted through the corresponding output-side optical fiber 203.

As apparent from the above description, the wavelength-division multiplexer according to the present invention provides advantages in that simplified packaging is provided, using a planar lightwave circuit and a number of thin film filters that are attached to the planar lightwave circuit in the form of blocks, to pass the wavelength components corresponding to their central wavelengths to divide the input light into distinct channels or paths.

While the preferred embodiments of the present invention have been illustrated and described, it will be understood by those skilled in the art that various changes and modifications may be made, and equivalents may be substituted for elements thereof without departing from the true scope of the present invention. In addition, many modifications may be made to adapt to a particular situation and the teaching of the present invention without departing from the central scope. Therefore, it is intended that the present invention not be limited to the particular embodiment disclosed as the best mode contemplated for carrying out the present invention, but that the present invention include all embodiments falling within the scope of the appended claims.

## Claims

1. A wavelength-division multiplexer for a telecommunication system, comprising:
a planar lightwave circuit (200) having a plurality of waveguides in zigzagged patterns through which optical signals are transmitted;
at least one input optical fiber (202) to the input port (P) of a first waveguide and a plurality of output optical fibers (203) successively connected to the output port of said zigzagged waveguides (202a); and,
a plurality of thin film filters (201), disposed between the plurality of said output optical fibers (203) and the output port of said zigzagged waveguides (202a) through an aligning procedure, for passing wavelength components according to its preset central wavelengths thereof.

2. The multiplexer of claim 1, wherein the plurality of said thin film filters (201) comprises an optical-fiber block that are aligned and connected to the plurality of said output optical fibers (203) and said planar lightwave circuit (200).

3. The multiplexer of claim 1 or 2, wherein said input optical fiber (202) is configured to have a wavelength-division-multiplex (WDM) optical signal.

4. The multiplxer of claim 1, 2 or 3, wherein the plurality of said waveguides includes an input port for receiving the optical signals in distinct channels and an output port for filtering out the preset central wavelength.

5. The multiplxer of claim 1, 2, 3 or 4, wherein said planar lightwave circuit (200) is integrated into a single chip.
